# EUROPEAN PATENT APPLICATION

(11) **EP 4 607 068 A1**
(43) Date of publication of application: **27.08.2025**
(21) Application number: 24158774.0
(22) Date of filing: 21.02.2024
(51) Int. Cl.: F16K 5/06, F16K 11/087, F16K 27/06, F16K 11/085

(54) **FLUID CONTROL VALVE**

(71) Applicant: VALEO SYSTEMES THERMIQUES, 78320 Le Mesnil Saint-Denis (FR)
(72) Inventor: GUT, Damian, 32 050 Skawina (PL); LIPOWSKI, Mateusz, 32 050 Skawina (PL); NOWAKOWSKI, Adrian, 32 050 Skawina (PL); POTOK, Dariusz, 32 050 Skawina (PL); ODILLARD, Laurent, 78322 Le Mesnil-Saint-Denis Cedex (FR)
(74) Representative: Valeo Powertrain Systems

(57) **Abstract**

A fluid control valve (300) for controlling a plurality of fluids from a plurality of fluid circuits comprises a shell (200) and a bushel (100). The shell comprises a plurality of fluid inlet and outlet openings adapted to connect to the plurality of fluid circuits. The bushel is provided inside the shell and rotatable relative to the shell, wherein the bushel comprises a first section (110), a second section (120) and a third section (130) adapted to control a first fluid, a second fluid and a third fluid respectively. The bushel further comprises a second fluid inlet channel (124) adapted to supply the second fluid to the second section, wherein the second fluid inlet channel passes through the first section and reaches the second section.

## Description

### TECHNICAL FIELD

The present invention relates to a fluid control valve, particularly to a multiway fluid control valve.

### BACKGROUND

Generally, a multiway fluid control valve comprises a rotatable bushel inside a stationary shell for controlling a plurality of fluids in a plurality of fluid circuits. The bushel comprises a plurality of sections for controlling the plurality of fluids in the plurality of fluid circuits respectively. The shell comprises a plurality of fluid inlet and outlet ports that are brought in fluid communication with each other based on angular position of the bushel within the shell, wherein different fluid is selectively supplied in the plurality of fluid circuits based on the angular position of the bushel within the shell. In one example, the bushel comprises a first section, a second section and a third section adapted to control a first fluid, a second fluid and a third fluid respectively, wherein the second section is located between the first section and the third section. The bushel comprises a first fluid inlet for supplying a first fluid and a second fluid to the first section and the second section respectively, and a third fluid inlet for supplying a third fluid to the third section. Since the first fluid and the second fluid are supplied to the first section and the second section respectively through a single fluid inlet, there are some design limitations for the fluid control valve in terms of number of modes, interface adaptation and so on. Particularly, independent control of the first fluid and the second fluid to the first section and the second section respectively is difficult.

### SUMMARY

An objective of the present invention is to provide a fluid control valve that alleviates the problems in the prior arts. To be more precise, an objective of the present invention is to reduce the design limitations for the fluid control valve.

To achieve the above objectives, the present invention herein provides a bushel for a fluid control valve. The bushel for the fluid control valve controlling a plurality of fluids from a plurality of fluid circuits comprises: a first section adapted to control a first fluid; a third section spaced apart from the first section, is adapted to control a third fluid; and a second section located between and connecting the first section and the third section, is adapted to control a second fluid, wherein a second fluid inlet channel adapted to supply the second fluid to the second section, passes through either the first section or the third section and reaches the second section.

In another aspect, the bushel extends along a longitudinal axis.

In another aspect, the second section, at one end, is axially attached to the first section and at another end, is axially attached to the third section.

In another embodiment, the first section, the second section and the third section are integrally formed with respect to each other.

In another aspect, the second fluid inlet channel extends along the longitudinal axis.

In another aspect, the second fluid inlet channel passes through the first section and reaches the second section.
In another aspect, the bushel comprises a third fluid inlet channel adapted to supply the third fluid to the third section.
In another aspect, the third fluid inlet channel extends along the longitudinal axis.

In another aspect, the third fluid inlet channel passes through the second section and reaches the third section.

In another aspect, the third fluid inlet channel is connected to the second fluid inlet channel at the second section.

The first section, the second section and the third section of the bushel are separated by intermediate portions. Each intermediate portion formed with a groove adapted to receive a sealing element therein.

Further, a cover comprises a sleeve that is formed with apertures adapted to be in fluid communication with at least one of the fluid flow channels and ports formed on the shell and adapted to configure fluid communication between guiding means and at least one of the fluid flow channels and ports formed on the shell.

In another embodiment, present invention herein provides a fluid control valve. The fluid control valve for controlling a plurality of fluids from a plurality of fluid circuits comprises: a shell with a plurality of fluid inlet and outlet openings adapted to connect to the plurality of fluid circuits; and a bushel as claimed in any one of preceding claims, adapted to control the plurality of fluids, is provided inside the shell and is rotatable relative to the shell.

According to the above embodiments, the second fluid inlet channel adapted to supply the second fluid to the second section, passes through the first section and reaches the second section. Since the second fluid is supplied to the second section through an independent fluid inlet channel, the design limitations for the fluid control valve are removed.

### BRIEF DESCRIPTION OF DRAWINGS

Other characteristics, details and advantages of the invention can be inferred from the description of the invention hereunder. A more complete appreciation of the invention and many of the attendant advantages thereof will be readily obtained, as the same becomes better understood by reference to the following description when considered in connection with the accompanying figures, wherein:
FIG. 1 illustrates a bushel for a fluid control valve, in accordance with an embodiment of the present invention;
FIG. 2 illustrates a sectional view of the bushel of FIG. 1, at the plane A-A';
FIG. 3 illustrates the fluid control valve with the bushel of FIG. 1; and
FIG. 4 illustrates an exploded view of the fluid control valve of FIG. 3.
FIG. 5 illustrates an isometric view of the bushel with the first section, the second section and the third section separated by intermediate portions.

### DETAILED DESCRIPTION OF PREFERRED EMBODIMENTS

It must be noted that the figures disclose the invention in a detailed enough way to be implemented, the figures helping to better define the invention, if need be. The invention should however not be limited to the embodiments disclosed in the description.

In the present description, some elements or parameters may be indexed, such as a first element and a second element. In this case, unless stated otherwise, this indexation is only meant to differentiate and name elements that are similar but not identical. No idea of priority should be inferred from such indexation, as these may be switched without betraying the invention. Additionally, this indexation does not imply any order in mounting or use of the elements of the invention.

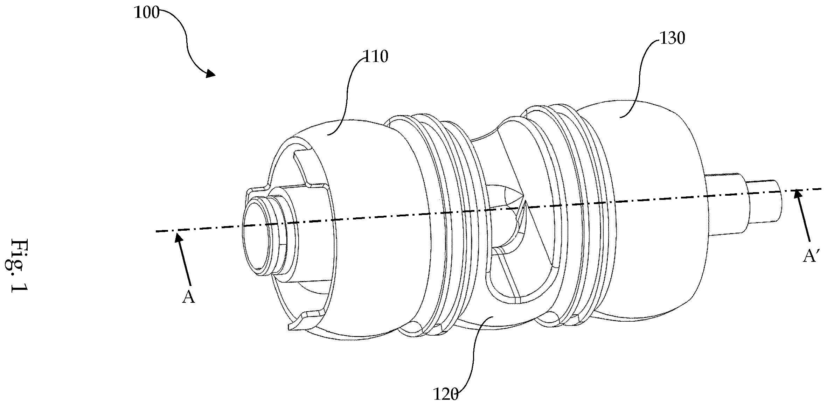

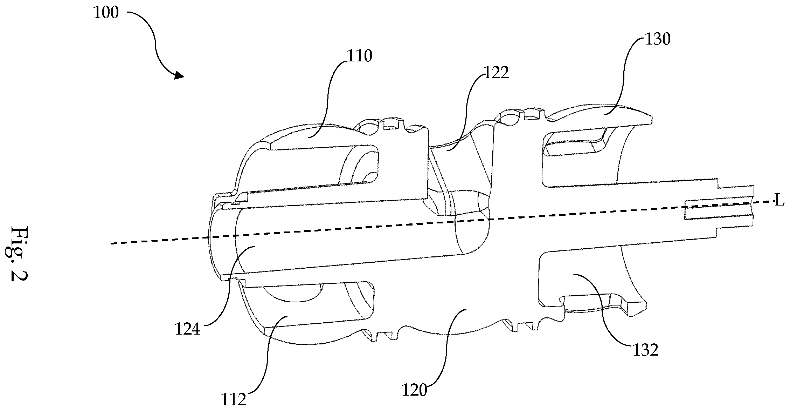

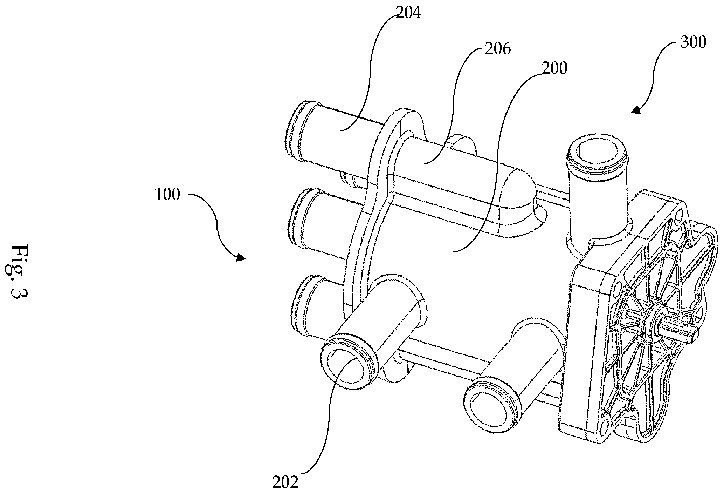

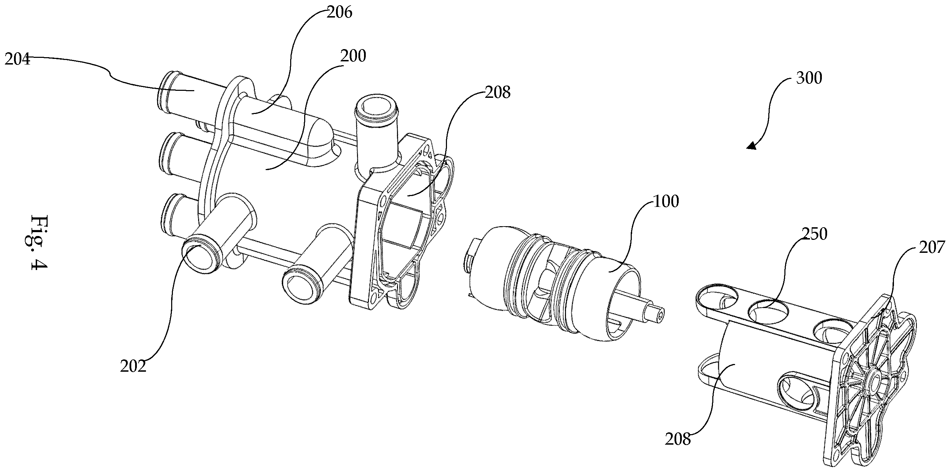

FIG. 1 illustrates a bushel 100 for a fluid control valve 300, in accordance with an embodiment of the present invention. FIG. 2 illustrates a sectional view of the bushel 100 of FIG. 1, at the plane A-A'. The bushel 100 for the fluid control valve 300 (shown in FIG. 3 and FIG. 4) controlling a plurality of fluids from a plurality of fluid circuits comprises a plurality of sections 110, 120, 130 adapted to control the plurality of fluids. In one embodiment, the bushel 100 for the fluid control valve 300 controlling a first fluid, a second fluid and a third fluid can comprise a first section 110 that is adapted to control the first fluid. The bushel 100 can comprise a third section 130 that is adapted to control the third fluid, wherein the third section 130 can be located spaced apart from the first section 110. The bushel 100 can comprise a second section 120 that is adapted to control the second fluid, wherein the second section 120 can be located between the first section 110 and the third section 130.

In one aspect, the first section 110, the second section 120 and the third section 130 can comprise a first guiding means 112, a second guiding means 122 and a third guiding means 132 respectively, wherein the first guiding means 112, the second guiding means 122 and the third guiding means 132 can be adapted to guide the first fluid, the second fluid and the third fluid respectively. In one example, the first guiding means 112, the second guiding means 122 and the third guiding means 132 can be a first hollow portion, a second hollow portion and a third hollow portion respectively, wherein the first hollow portion, the second hollow portion and the third hollow portion can be adapted to guide the first fluid, the second fluid and the third fluid respectively.

In another aspect, the bushel 100 can be made as a single part. In another example, the second section 120, at one end, can be connected to the first section 110 and at another end, can be connected to the third section 130. In another aspect, the bushel 100 can comprise a longitudinal axis L along which the bushel 100 extends. In another example, the first section 110, the second section 120 and the third section 130 can be located along the longitudinal axis L. The second section 120, at one end, can be axially attached to the first section 110 and at another end, can be axially attached to the third section 130. In another embodiment, the first section 110, the second section 120 and the third section 130 are integrally formed with respect to each other.

In another aspect, the bushel 100 can comprise a second fluid inlet channel 124 that is adapted to supply the second fluid to the second section 120. In another aspect, the second fluid inlet channel 124 can extend along the longitudinal axis L. In another aspect, the second fluid channel 124 can pass through either the first section 110 or the third section 130 and reach the second section 120. In another example, the second fluid channel 124 can pass through the first section 110 and reach the second section 120. In another example, the second fluid channel 124 can pass through the third section 130 and reach the second section 120. Such configuration of the second fluid inlet channel 124 enables in supplying the second fluid to the second section 120 independent of the flow of the first fluid to the first section 110. Further, the second fluid inlet channel 124 extending along the longitudinal axis L helps in reducing pressure drop of the second fluid.

In another aspect, the bushel 100 can comprise a third fluid inlet channel that is adapted to supply the third fluid to the third section 130. In another aspect, the third fluid inlet channel can extend along the longitudinal axis L. In another aspect, the third fluid inlet channel can pass through the second section 120 and reach the third section 130. The third fluid channel can be fluidically connected to the second fluid inlet channel 124 at the second section 120. Therefore, the third fluid can be supplied to the third section 130, through the second fluid inlet channel 124 passing through the first section 110 and the third fluid inlet channel passing through the second section 120.

FIG. 3 illustrates the fluid control valve 300 with the bushel 100 of FIG. 1 received therein. FIG. 4 illustrates an exploded view of the fluid control valve 300 of FIG. 3. In another embodiment, the fluid control valve 300 for controlling the plurality of fluids from the plurality of fluid circuits can comprise a shell 200 and the bushel 100 as described in any one of the above embodiments. The shell 200 comprises a closable opening 208 for receiving the bushel 100 inside the shell 200. The closable opening 208 is adapted to be closed by a cover 207 that is mounted around the closable opening 208. The cover 207 includes a sleeve 208 that axially extends from an end plate of the cover 207. The sleeve 208 is adapted to at least partially encapsulate the bushel 100 and is formed with apertures 250. In another aspect, the shell 200 can comprise a plurality of ports, particularly, fluid inlet ports 202 and fluid outlet ports 204 that are adapted to connect to the plurality of fluid circuits. The ports can interchangeable act as inlet and outlet ports. The shell 200 further comprises fluid flow channels 206 formed thereon. In another aspect, the bushel 100 can be provided inside the shell 200 and rotatable relative to the shell 200. An actuator disposed outside the shell and connected to a spindle emanating from the bushel 100 and extending outside the shell 200 drives the bushel 100. In another aspect, the bushel 100 can be adapted to control the plurality of fluids by rotating the bushel 100 between a plurality of angular positions with respect to the shell 200. For example, the bushel 100 establishes or disrupts fluid communication between any of the ports or directs flow to the fluid flow channels 206 based on particular angular orientation of the bushel 100 within the shell 200. In another example, the bushel 100 can be adapted to control three fluids by rotating the bushel 100 between three angular positions with respect to the shell 200. The first section 110, the second section 120 and the third section 130 of the bushel 100 can be adapted to control the first fluid, the second fluid and the third fluid respectively by rotating the bushel 100 between a first angular position, a second angular position and a third angular position respectively with respect to the shell 200.

According to above-described embodiments, the second fluid inlet channel 124 adapted to supply the second fluid to the second section 120, passes through the first section 110 and reaches the second section 120. Since the second fluid is supplied to the second section 120 through an independent fluid inlet channel, the design limitations for the fluid control valve 300 are removed.

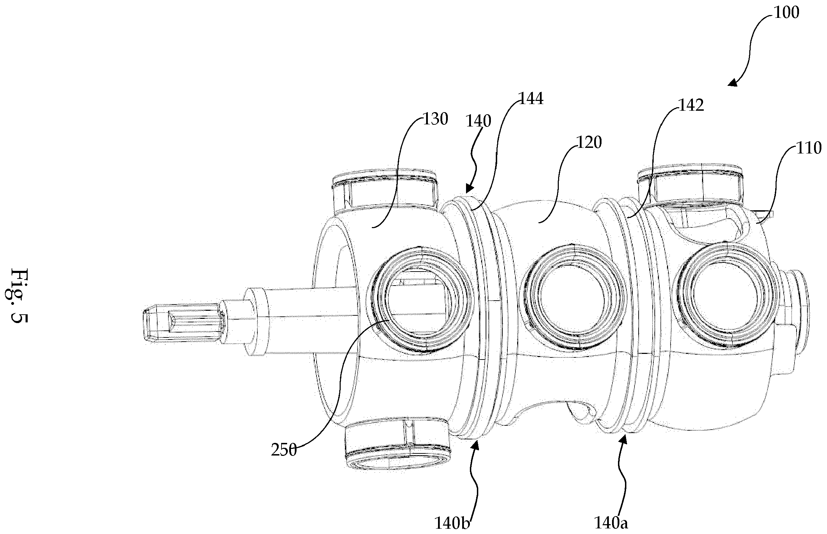

Further, the first section 110, the second section 120 and the third section 130 are separated by intermediate portions 140. FIG. 5 illustrates an isometric view of the bushel 100 with the first section 110, the second section 120 and the third section 130 separated by intermediate portions 140. More specifically, a first intermediate portion 140a is disposed between the first section 110 and the second section 120. Referring to the FIG. 5 only one of the intermediate portions 140 is depicted with the sealing element 144 received in the corresponding groove 142, while other intermediate portion 140 is shown without the sealing element 144 in the groove 142. Similarly, a second intermediate portion 140b is disposed between the second section 120 and the third section 130. Each intermediate portion 140 is formed with a groove 142 adapted to receive a sealing element 144 therein. The sealing element 144 is disposed between the bushel 100 and the shell 200. More specifically, the sealing element 144 is urged against the shell and adapted to prevent fluid leakage between the adjacent sections.

Further, the sleeve 208 is formed with apertures 250 adapted to be in fluid communication with at least one of the guiding means 112, 122, 132 formed on the bushel 100 based on angular position of the bushel 100. The apertures 250 formed on the sleeve 208 are adapted to configure fluid communication between guiding means 112, 122, 132 and at least one of the fluid flow channels 206 and ports 202, 204 formed on the shell 200 based on angular position of the bushel 100. In accordance with a preferred embodiment, the apertures 250 are formed on the sleeve 208 receiving the bushel 100.

All the above-described embodiments are just to explain the present invention while more embodiments and combinations thereof might exist. Hence, the present invention should not be limited to the above-described embodiments alone.

## Claims

1. A bushel (100) for a fluid control valve (300) controlling a first fluid, a second fluid and a third fluid comprises:
a first section (110) adapted to control the first fluid;
a third section (130) spaced apart from the first section (110), is adapted to control the third fluid; and
a second section (120) located between and connecting the first section (110) and the third section (130), is adapted to control the second fluid, wherein a second fluid inlet channel (124) adapted to supply the second fluid to the second section (120) passes through the first section (110) and reaches the second section (120).

2. The bushel (100) as claimed in the previous claim, wherein the second section (120), at one end, is axially attached to the first section (110) and at another end, is axially attached to the third section (130).

3. The bushel (100) as claimed in any of the preceding claims, wherein the first section (110), the second section (120) and the third section (130) are integrally formed with respect to each other.

4. The bushel as claimed in any of the preceding claims, wherein the second fluid inlet channel (124) extends along the longitudinal axis (L).

5. The bushel (100) as claimed in any of the preceding claims comprises a third fluid inlet channel adapted to supply the third fluid to the third section (130).

6. The bushel (100) as claimed in any of the preceding claims, wherein the third fluid inlet channel extends along the longitudinal axis (L).

7. The bushel (100) as claimed in any of the preceding claims, wherein the third fluid inlet channel passes through the second section (120) and reaches the third section (130).

8. The bushel (100) as claimed in any of the preceding claims, wherein the third fluid inlet channel is fluidically connected to the second fluid inlet channel (124) at the second section (120).

9. The bushel (100) as claimed in any of the preceding claims, wherein the first section (110), the second section (120) and the third section (130) are separated by intermediate portions (140), each intermediate portion (140) formed with a groove (142) adapted to receive a sealing element (144) therein.

10. The bushel (100) as claimed in any of the preceding claims, a cover (207) further comprises a sleeve (208) formed with apertures (150) adapted to be in fluid communication with the guiding means (112,122,132) and at least one of the fluid flow channels (206) and ports (202, 204) formed on the shell (200) and adapted to configure fluid communication between guiding means (112,122,132) and at least one of the fluid flow channels (206) and ports (206) formed on the shell (200).

11. A fluid control valve (300) for controlling a plurality of fluids from a plurality of fluid circuits comprises:
a shell (200) with a plurality of fluid inlet and outlet openings adapted to connect to the plurality of fluid circuits; and
a bushel (100) as claimed in any one of preceding claims, adapted to control the plurality of fluids, is provided inside the shell (200) and is rotatable relative to the shell (200).
